# EUROPEAN PATENT SPECIFICATION

(11) **EP 3 882 739 B1**
(45) Date of publication and mention of the grant of the patent: **20.04.2022**
(21) Application number: 20382202.8
(22) Date of filing: 18.03.2020
(51) Int. Cl.: G05G 1/44, G05G 1/38, G05G 23/00

(54) **ROTATION DETECTION DEVICE AND VEHICLE PEDAL ARRANGEMENT COMPRISING SAID ROTATION DETECTION DEVICE**
ROTATIONSERFASSUNGSVORRICHTUNG UND FAHRZEUGPEDALANORDNUNG MIT DIESER ROTATIONSERFASSUNGSVORRICHTUNG
DISPOSITIF DE DÉTECTION DE ROTATION ET AGENCEMENT DE PÉDALE DE VÉHICULE COMPRENANT LEDIT DISPOSITIF DE DÉTECTION DE ROTATION

(43) Date of publication of application: 22.09.2021
(73) Proprietor: Batz, S.Coop., 48140 Igorre (ES)
(72) Inventor: ALONSO ALONSO, Arturo, 48004 BILBAO (ES); ANZOLA ARTABE, Egoitz, 48004 BILBAO (ES); TOTORIKA TXURRUKA, Iker, 48200 DURANGO (ES)
(74) Representative: Igartua, Ismael

(56) References cited:
- EP-A1- 3 650 324
- JP-A- 2002 036 904
- US-A1- 2010 206 122
- US-A1- 2019 322 173
- US-B1- 6 580 352
- US-B2- 9 360 882

## Description

### TECHNICAL FIELD

The present invention relates to rotation detection devices for the detection of the rotation of vehicle pedals and to vehicle pedal arrangements comprising said rotation detection devices.

### PRIOR ART

Rotation detection devices for the detection of the rotation of vehicle pedals are well known.

WO2014/084791A1 discloses a rotation detection device for the detection of rotation of a vehicle pedal comprising a pedal shaft, the pedal being rotatable around an axis of rotation extending through a center of the pedal shaft. The rotation detection device comprises a movable first part, which accompanies the rotational motion of the pedal, a stationary second part, wherein the first and the second part are arranged radially outside of the pedal shaft, a magnetic field sensing component arranged in the second part and a magnetic element arranged in the first part. The magnetic field sensing component generates an electric signal originating from magnetic interaction between the first and the second part when the first and the second part are moving in relation to each other. The first part is coupled to the second part so that the motion of the first part is controlled in relation to the second part. The first part comprises a base part and arms protruding from the base part, the arms at least partly surrounding the second part, so that a guide of the two parts in relation to each other is created in a radial direction.

In one embodiment the rotation detection device further comprises a cover coupled to the second part that at least partially covers the first part.

US2010/0206122A1 discloses a rotation detection device according to the preamble of claim 1.

### DISCLOSURE OF THE INVENTION

The object of the invention is to provide a rotation detection device for the detection of rotation of a vehicle pedal and a vehicle pedal arrangement that comprises said rotation detection device, as defined in the claims.

The rotation detection device of the invention is configured for the detection of the rotation of a vehicle pedal comprising a pedal shaft, the pedal being rotatable around an axis of rotation extending through a center of the pedal shaft. The rotation detection device of the invention comprises a movable first part, which is configured to rotate around the axis of rotation together with the pedal, and a stationary second part, the first and the second part being arranged radially outside of the pedal shaft. The rotation detection device also comprises a magnetic field sensing component arranged in the first or in the second part and a magnetic element arranged in that part of the first or the second part that does not comprise the magnetic field sensing component. The magnetic field sensing component generates an electric signal originated from the magnetic interaction between the first and the second part when the first and the second part are moving in relation to each other.

The first part is coupled to the second part so that the motion of the first part is controlled in relation to the second part.

The rotation detection device further comprises a cover coupled to the second part that at least partially covers the first part. The cover protects the first part from impacts, for example of mounting tools, during the coupling of the rotation detection device to the vehicle pedal arrangement, during the assembly of the vehicle pedal arrangement to the vehicle (for example when screwing the steering column bracket to the bracket where the rotation detection device is coupled) or during the vehicle repair. The cover acts also as a dust protector for the first part.

The second part comprises a housing where the first part is arranged, the first part comprises a base part and at least one upper arm protruding from the base part and at least one lower arm protruding from the base part, and the cover comprises an upper front wall delimiting an upper guide groove with the second part, wherein the upper guide groove cooperates with the at least one upper arm, and a lower front wall delimiting a lower guide groove with the second part, wherein the lower guide groove cooperates with the at least one lower arm for guiding the first part in relation to the second part in an axial direction. The cover further comprises an upper side wall and a lower side wall, the upper side wall and the lower side wall cooperating with the base part for guiding the first part in relation to the second part in a radial direction. Moreover, as the first part is arranged in a housing of the second part and said first part is arranged between the second part and the cover, the cover retains the first part in the housing of the second part. This retention function is particularly important during the assembly of the rotation detection device, as well as during handling, transport and storage, as the cover avoids the decoupling of the first part from the second part.

In the rotation detection device of the invention, the cover, apart from protecting the first part from impacts and from dust, guides the first part in relation to the second part both in the axial and the radial directions, and retains the first part in the housing of the second part. Therefore, the cover performs, in combination with the second part, four different functions: (i) protects the first part, (ii) guides the first part in the axial direction in relation to the second part, (iii) guides the first part in the radial direction in relation to the second part, and (iv) retains the first part in the housing of the second part. In this way, the rotation detection device of the invention provides a solution that is more compact and robust than the rotation detection devices of the prior art.

These and other advantages of the rotation detection device of the invention will become apparent in view of the drawings and the detailed disclosure of the invention.

### DESCRIPTION OF THE DRAWINGS

Figure 1 shows an embodiment of the rotation detection device of the invention mounted at a vehicle pedal arrangement.
Figure 2 shows an exploded view of the vehicle pedal arrangement of Figure 1.
Figure 3 shows a detail view of the vehicle pedal arrangement of Figure 1.
Figure 4 shows an exploded view of the rotation detection device of Figure 1.

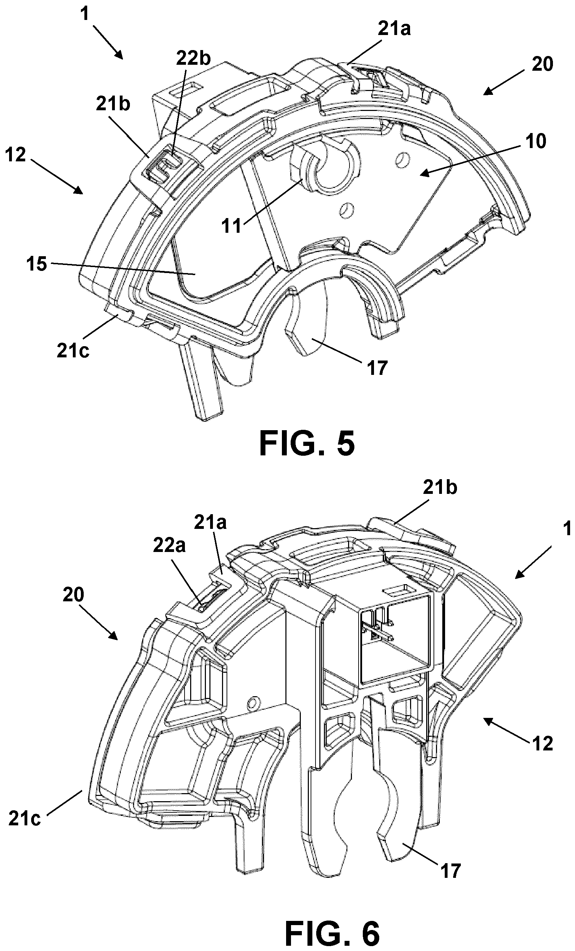

Figure 5 shows a first perspective view of the rotation detection device of Figure 4.
Figure 6 shows a second perspective view of the rotation detection device of Figure 4.

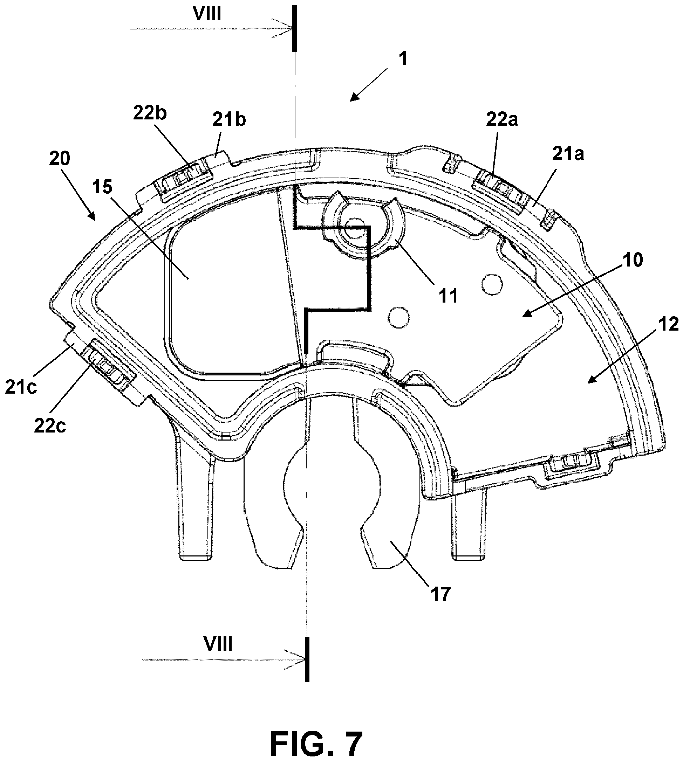

Figure 7 shows a front view of the rotation detection device of Figure 4.
Figure 8 shows a section view according to section VIII-VIII of Figure 7.
Figure 9 shows detail IX of Figure 8.
Figure 10 shows detail X of Figure 8.

### DETAILED DISCLOSURE OF THE INVENTION

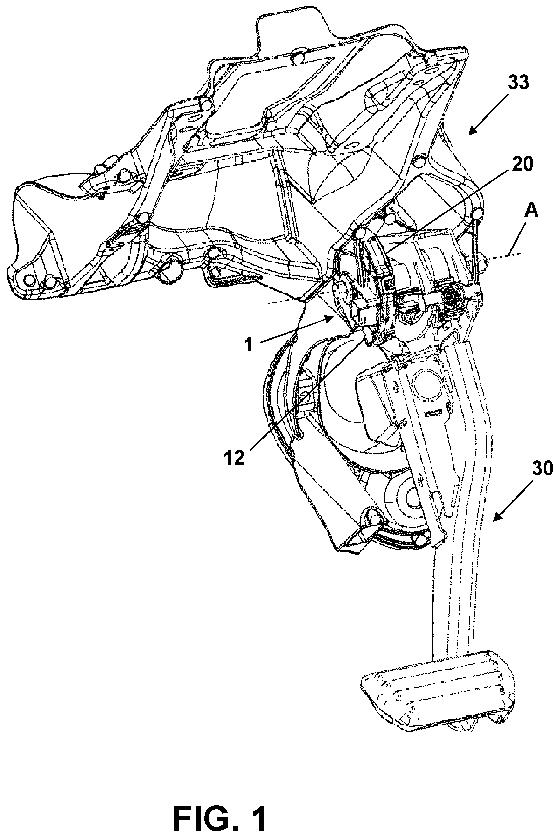

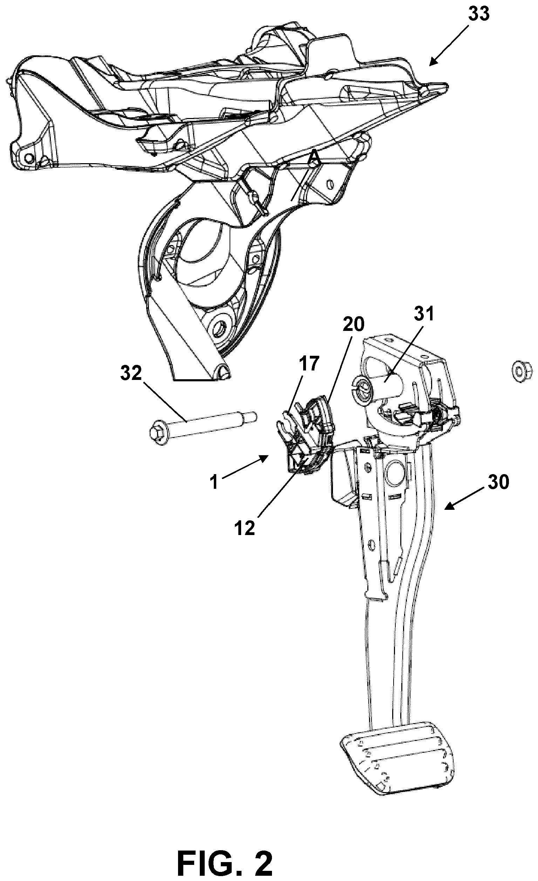

The rotation detection device 1 of the invention is configured for the detection of the rotation of a vehicle pedal 30 comprising a pedal shaft 31, the pedal 30 being rotatable around an axis of rotation A extending through a center of the pedal shaft 31. Figures 1, 2 and 3 show a vehicle pedal arrangement comprising an embodiment of the rotation detection device 1. In the embodiment shown in said figures, the pedal 30 comprises, as can be seen in Fig. 2, a pedal shaft 31 that is integral with the pedal 30 and that is hollow. In this embodiment, the hollow pedal shaft 31 houses a rotation shaft 32 that is coaxial to the pedal shaft 31 and that is fixed to the bracket 33, so that the rotation shaft 32 holds the pedal shaft 31. However, the pedal shaft of the vehicle pedal arrangement of the invention can have different configurations, for example it is not essential that it is integral with the pedal and it is not essential that it is hollow.

The rotation detection device 1 comprises a movable first part 10, which is configured to rotate around the axis of rotation A together with the pedal 30, and a stationary second part 12. The first and the second part 10 and 12 are arranged, as can be seen in Figures 1 and 2, radially outside of the pedal shaft 31. The rotation detection device 1 further comprises a magnetic field sensing component 16 arranged in the first 10 or in the second part 12 and a magnetic element 14 arranged in that part of the first part 10 or the second part 12 that does not comprise the magnetic field sensing component 16. The magnetic field sensing component 16 generates an electric signal originated from the magnetic interaction between the first part 10 and the second part 12 when the first part 10 and the second part 12 are moving in relation to each other. In the embodiment shown in the figures, the magnetic field sensing component 16 is arranged in the second part 12 and the magnetic element is arranged in the first part 10.

The first part 10 is coupled to the second part 12 so that the motion of the first part 10 is controlled in relation to the second part 12. The first part 10 comprises a base part 10a and at least one upper arm 10b and at least one lower arm 10c protruding from the base part 10a.

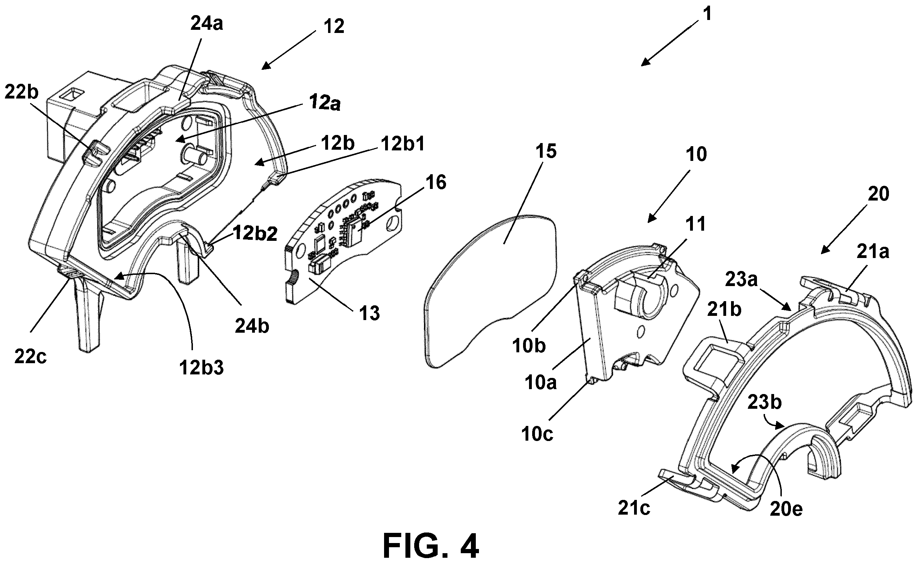

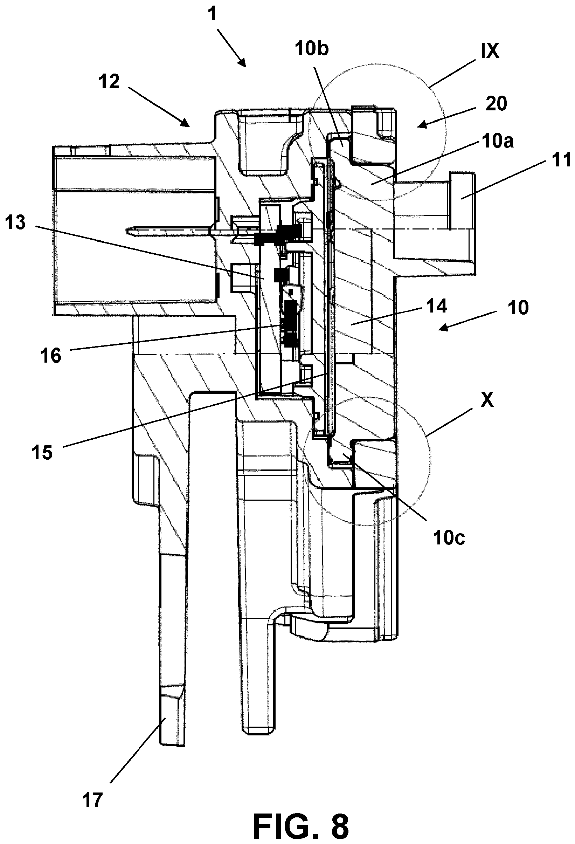

The rotation detection device 1 further comprises a cover 20 coupled to the second part 12 that at least partially covers the first part 10. The second part 12 comprises a housing 12b (see Figure 4) where the first part 10 is arranged. The cover 20 comprises at least one upper front wall 20b and at least one lower front wall 20c, the upper front wall 20b and the second part 12 delimiting a guide groove 18 that cooperates with the at least one upper arm 10b of the first part 10, and the lower front wall 20c and the second part 12 delimiting a guide groove 19 that cooperates with the at least one lower arm 10c of the first part 10 for guiding the first part 10 in relation to the second part 12 in an axial direction (see Figures 8, 9 and 10). The cover 20 further comprises an upper side wall 20a and a lower side wall 20d, the upper side wall 20a and the lower side wall 20d cooperating with the base part 10a for guiding the first part 10 in relation to the second part 12 in a radial direction (see Figures 8, 9 and 10).

The cover 20, apart from protecting the first part 10 from impacts and from dust, guides the first part 10 in relation to the second part 20 both in the axial and the radial directions, and retains the first part 10 in the housing 12b of the second part 20. Therefore, the cover 20 performs, in combination with the second part 12, four different functions: (i) protects the first part 10, (ii) guides the first part 10 in the axial direction in relation to the second part 12, (iii) guides the first part 10 in the radial direction in relation to the second part 12, and (iv) retains the first part 10 in the housing 12b of the second part 12.

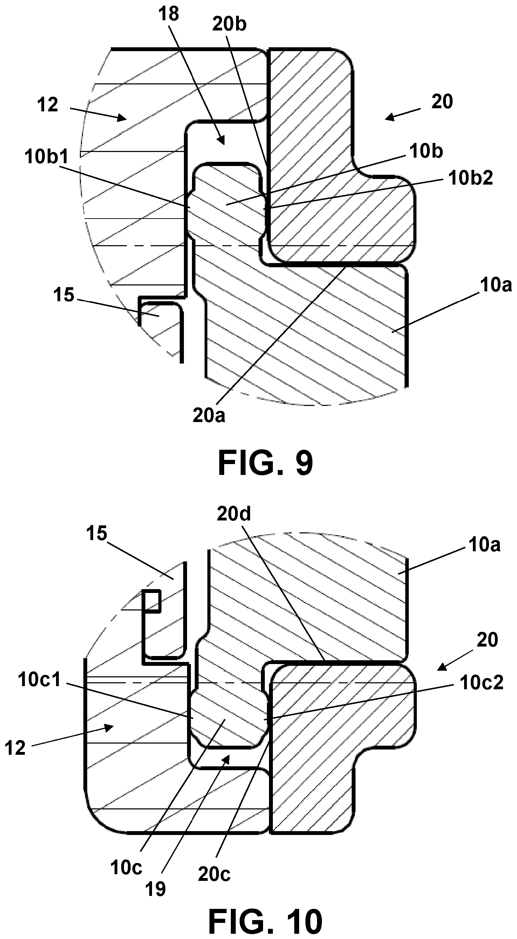

The at least one upper arm 10b is an arm that projects from the base part 10a away from the axis of rotation A of the first part 10, and the at least one lower arm 10c is an arm that projects from the base part 10a towards the axis of rotation A of the first part 10. The upper front wall 20b of the cover 20 delimiting the upper guide groove 18 that cooperates with the at least one upper arm 10b can be seen in Figures 8 and 9, and the lower front wall 20c delimiting the lower guide groove 19 that cooperates with the at least one lower arm 10c can be seen in Figures 8 and 10.

The base part 10a comprises an upper contour and a lower contour. The upper contour of the base part 10a is the contour that is furthest from the axis of rotation A of the first part 10, and the lower contour of the base part 10a is the contour that is closest from the axis of rotation A of the first part 10. The upper side wall 20a of the cover 20 cooperates with the upper contour of the base part 10a and the lower side wall 20b of the cover 20 cooperates with the lower contour of the base part 10a.

The upper contour and the lower contour of the base part 10a preferably comprise at least two respective protrusions 10b1, 10b2, 10c1 and 10c2, the protrusions 10b1 and 10b2 of the upper contour sliding on the upper side wall 20a of the cover 20 and the protrusions 10c1 and 10c2 of the lower contour sliding on the lower side wall 20d of the cover 20.

The cover 20 preferably comprises a frame (see Figure 4), the frame comprising the upper front wall 20b, the lower front wall 20c, the upper side wall 20a and the lower side wall 20d.

The angular path of the first part 10 is preferably delimited by at least one side wall 12b1, 12b2, 12b3 of the housing 12b of the second part 12 and/or by at least one lateral side wall 20e of the cover 20. If the cover 20 comprises a frame, as it is the case for example in the embodiment shown in the figures, the frame will also comprise this at least one lateral side wall 20e. In the embodiment shown in the figures, the housing 12b comprises two side walls 12b1, 12b2 on the right side and one side wall 12b3 on the left side, and the cover 20 comprises a lateral side wall 20e on the left side (see Figure 4). In another embodiment, the cover 20 can also comprise a lateral side wall on the right side.

As can be seen in the embodiment shown in the figures, the arms 10b, 10c of the first part 10 are preferably straight extensions aligned with the base part 10a. Moreover, the arms 10b, 10c of the first part 10 preferably comprise respective first protrusion 10b1, 10c1 that slide on the second part 12 and respective second protrusions 10b2, 10c2 that slide on the respective front wall 20b, 20c of the cover 20 (see Figures 9 and 10).

The cover 20 preferably comprises at least one elastic hook 21a, 21b, 21c that at least partially surrounds the second part 12 and cooperates with a respective wedge 22a, 22b, 22c of the second part 12 for fixing the cover 20 to the second part 12.The cover 20 more preferably comprises, as it is the case in the embodiment shown in the figures, two upper equally distributed elastic hooks 21a, 21b that cooperate with respective wedges 22a, 22b of the second part 12, the cover 20 preferably comprising one additional elastic hook 21c on each lateral side of the cover 20 also cooperating with respective wedges 22c of the second part 12. As for the other elements of the rotation detection device 1, "upper" refers to the location that is furthest from the axis of rotation A of the first part 10.

As the cover 20 comprises the hooks 21a, 21b, 21 c, it is easy to assemble to the second part 12, and it is also easy to disassemble from the second part 12 if necessary.

The cover 20 preferably comprises at least one recess 23a, 23b and the second part 12 comprises a respective protrusion 24a, 24b, the protrusion 24a, 24b of the second part 12 being housed in the respective recess 23a, 23b when the cover 20 is fixed to the second part 12. The recesses 23a, 23b and the respective protrusions 24a,24b contribute to the correct coupling of the cover 20 and the second part 12.

The magnetic field sensing component 16 is preferably arranged in a cavity 12a of the second part 12 that is adjacent to the housing 12b where the first part 10 is arranged, and the magnetic element 14 is arranged in the base part 10a of the first part 10. In particular, the magnetic field sensing element is arranged on a circuit board 13 that is housed in the cavity 12a. The cavity 12a is covered with a plate 15 that protects the circuit board 13 and the magnetic field sensing component 16, as can be seen in Figure 4.

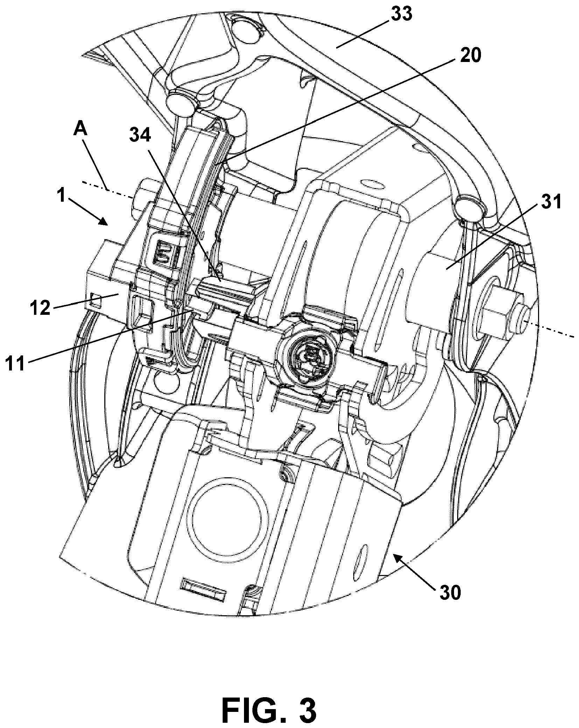

The base part 10a comprises a fastening part 11 which protrudes from the first part 10 in a direction which is substantially parallel with the pedal shaft 31, the fastening part 11 being configured for being coupled with the vehicle pedal 30 by means of a link 34, as shown in Figure 3.

The second part 12 comprises a snap fastener 17 configured to be attached, in the embodiment shown in Figures 1 to 3, to the fixed rotation shaft 32 that is coaxial to the pedal shaft 31, the pedal shaft 31 being, as already explained, a hollow shaft that houses the fixed rotation shaft 32 and the fixed rotation shaft 32 being fixed to the bracket 33.

## Claims

1. Rotation detection device for the detection of the rotation of a vehicle pedal (30) comprising a pedal shaft (31), the pedal (30) being rotatable around an axis of rotation (A) extending through a center of the pedal shaft (31), the rotation detection device (1) comprising
a movable first part (10), which is configured to rotate around the axis of rotation (A) together with the pedal (30),
a stationary second part (12), wherein the first and the second part (10, 12) are arranged radially outside of the pedal shaft (31),
a magnetic field sensing component (16) arranged in the first (10) or in the second part (12), and
a magnetic element (14) arranged in that part of the first or the second part (10, 12) that does not comprise the magnetic field sensing component (16), wherein the magnetic field sensing component (16) generates an electric signal originated from the magnetic interaction between the first and the second part (10, 12) when the first and the second part (10, 12) are moving in relation to each other,
wherein the first part (10) is coupled to the second part (12) so that the motion of the first part (10) is controlled in relation to the second part (12),
the rotation detection device (1) further comprising a cover (20) coupled to the second part (12) that at least partially covers the first part (10),
the second part (12) comprising a housing (12b) where the first part (10) is arranged, **characterized in that** the first part (10) comprises a base part (10a) and at least one upper arm (10b) protruding from the base part (10a) and at least one lower arm (10c) protruding from the base part (10a),
the cover (20) comprising an upper front wall (20b) delimiting an upper guide groove (18) with the second part (12), wherein the upper guide groove (18) cooperates with the at least one upper arm (10b) and a lower front wall (20c) delimiting a lower guide groove (19) with the second part (12), wherein the lower guide grove (19) cooperates with the at least one lower arm (10c) for guiding the first part (10) in relation to the second part (12) in an axial direction,
the cover (20) further comprising an upper side wall (20a) and a lower side wall (20d), the upper side wall (20a) and the lower side wall (20d) cooperating with the base part (10a) for guiding the first part (10) in relation to the second part (12) in a radial direction.

2. Rotation detection device according to claim 1, wherein the base part (10a) comprises an upper contour and a lower contour, the upper side wall (20a) of the cover (20) cooperating with the upper contour of the base part (10a), and the lower side wall (20b) of the cover (20) cooperating with the lower contour of the base part (10a).

3. Rotation detection device according to claim 2, wherein the upper contour and the lower contour of the base part (10a) comprise at least two respective protrusions (10b1, 10b2, 10c1, 10c2), the protrusions (10b1, 10b2) of the upper contour sliding on the upper side wall (20a) of the cover (20) and the protrusions (10c1, 10c2) of the lower contour sliding on the lower side wall (20d) of the cover (20).

4. Rotation detection device according any of the preceding claims, wherein the cover (20) comprises a frame, the frame comprising the upper front wall (20b), the lower front wall (20c), the upper side wall (20a) and the lower side wall (20d).

5. Rotation detection device according to any of the preceding claims, wherein the angular path of the first part (10) is delimited by at least one side wall (12b1, 12b2, 12b3) of the housing (12b) of the second part (12) and/or by at least one lateral side wall (20e) of the cover (20).

6. Rotation detection device according to any of the preceding claims, wherein the at least one arm (10b, 10c) of the first part (10) is a straight extension aligned with the base part (10a).

7. Rotation detection device according to any of the preceding claims, wherein the at least one arm (10b, 10c) of the first part (10) comprises a first protrusion (10b1, 10c1) that slides on the second part (12) and a second protrusion (10b2, 10c2) that slides on the respective front wall (20b, 20c) of the cover (20).

8. Rotation detection device according to any of the preceding claims, wherein the cover (20) comprises at least one elastic hook (21a, 21b, 21c) that at least partially surrounds the second part (12) and cooperates with a respective wedge (22a, 22b, 22c) of the second part (12) for fixing the cover (20) to the second part (12).

9. Rotation detection device according to claim 8, wherein the cover (20) comprises at least two upper equally distributed elastic hooks (21a, 21b) that cooperate with respective wedges (22a, 22b) of the second part (12), the cover (20) preferably comprising one additional elastic hook (21c) on each lateral side of the cover (20) also cooperating with respective wedges (22c) of the second part (12).

10. Rotation detection device according to any of the preceding claims, wherein the cover (20) comprises at least one recess (23a, 23b) and the second part (12) comprises a respective protrusion (24a, 24b), the protrusion (24a, 24b) of the second part (12) being housed in the respective recess (23a, 23b) when the cover (20) is fixed to the second part (12).

11. Rotation detection device according to any of the preceding claims, wherein the magnetic field sensing component (16) is arranged in a cavity (12a) of the second part (12) that is adjacent to the housing (12b) where the first part (10) is arranged, and the magnetic element (14) is arranged in the base part (10a) of the first part (10).

12. Rotation detection device according to any of the preceding claims, wherein the base part (10a) comprises a fastening part (11) which protrudes from the first part (10) in a direction which is substantially parallel with the pedal shaft (31), the fastening part (11) being configured for being coupled with the vehicle pedal (30) by means of a link (34).

13. Rotation detection device according to any of the preceding claims, wherein the second part (12) comprises a snap fastener (17) configured to be attached to a fixed rotation shaft (32) that is coaxial to the pedal shaft (31), the pedal shaft (31) being a hollow shaft that houses the fixed rotation shaft (32) and the fixed rotation shaft (32) being fixed to a bracket (33).

14. Vehicle pedal arrangement comprising a vehicle pedal (30) rotatably coupled to a bracket (33), the vehicle pedal arrangement comprising a rotation detection device (1) according to any of the preceding claims.

## Patentansprüche

1. Rotationserfassungsvorrichtung zum Erfassen der Rotation eines Fahrzeugpedals (30), umfassend eine Pedalwelle (31), wobei das Pedal (30) um eine durch die Mitte der Pedalwelle (31) verlaufende Rotationsachse (A) drehbar ist, wobei die Rotationserfassungsvorrichtung (1) Folgendes umfasst
einen beweglichen ersten Teil (10), der so ausgelegt ist, dass er sich zusammen mit dem Pedal (30) um die Rotationsachse (A) dreht,
einen feststehenden zweiten Teil (12), wobei der erste Teil und der zweite Teil (10, 12) radial außerhalb der Pedalstange (31) angeordnet sind,
ein im ersten (10) oder im zweiten Teil (12) angeordnetes Magnetfeldsensorelement (16) und
ein magnetisches Element (14) in dem Bereich des ersten oder zweiten Teils (10, 12), der nicht die Magnetfeldsensorkomponente (16) enthält, wobei die Magnetfeldsensorkomponente (16) ein elektrisches Signal infolge der magnetischen Wechselwirkung zwischen dem ersten und dem zweiten Teil (10, 12) bei der Bewegung des ersten und des zweiten Teils (10, 12) relativ zueinander erzeugt,
wobei der erste Teil (10) mit dem zweiten Teil (12) so verbunden ist, dass eine gesteuerte Bewegung des ersten Teils (10) relativ zum zweiten Teil (12) erfolgt, wobei die Rotationserfassungsvorrichtung (1) ferner eine mit dem zweiten Teil (12) verbundene Abdeckung (20) umfasst, die den ersten Teil (10) zumindest teilweise bedeckt,
wobei der zweite Teil (12) ein Gehäuse (12b) besitzt, an dem der erste Teil (10) angeordnet ist, **dadurch gekennzeichnet, dass** der erste Teil (10) einen Grundkörper (10a) sowie mindestens einen aus dem Grundkörper (10a) herausragenden oberen Arm (10b) und mindestens einen aus dem Grundkörper (10a) herausragenden unteren Arm (10c) aufweist,
wobei die Abdeckung (20) Folgendes umfasst: eine obere Stirnwand (20b), die eine obere Führungsnut (18) zur Führung relativ zum zweiten Teil (12) begrenzt, wobei die obere Führungsnut (18) mit dem mindestens einen oberen Arm (10b) zusammenwirkt, und eine untere Stirnwand (20c), die eine untere Führungsnut (19) zur Führung relativ zum zweiten Teil (12) begrenzt, wobei die untere Führungsnut (19) zur Führung des ersten Teils (10) in Axialrichtung relativ zum zweiten Teil (12) mit dem mindestens einen unteren Arm (10c) zusammenwirkt,
wobei die Abdeckung (20) ferner eine obere Seitenwand (20a) und eine untere Seitenwand (20d) umfasst, wobei die obere Seitenwand (20a) und die untere Seitenwand (20d) zur Führung des ersten Teils (10) in Radialrichtung relativ zum zweiten Teil (12) mit dem Grundkörper (10a) zusammenwirken.

2. Rotationserfassungsvorrichtung nach Anspruch 1, wobei der Grundkörper (10a) eine obere und eine untere Umrisslinie aufweist, wobei die obere Seitenwand (20a) der Abdeckung (20) mit der oberen Umrisslinie des Grundkörpers (10a) zusammenwirkt und die untere Seitenwand (20b) der Abdeckung (20) mit der unteren Umrisslinie des Grundkörpers (10a) zusammenwirkt.

3. Rotationserfassungsvorrichtung nach Anspruch 2, wobei die obere und die untere Umrisslinie des Grundkörpers (10a) jeweils mindestens zwei Auswölbungen (10b1, 10b2, 10c1, 10c2) aufweisen, wobei die Auswölbungen (10b1, 10b2) der oberen Umrisslinie auf der oberen Seitenwand (20a) der Abdeckung (20) und die Auswölbungen (10c1, 10c2) der unteren Umrisslinie auf der unteren Seitenwand (20d) der Abdeckung (20) gleiten.

4. Rotationserfassungsvorrichtung nach einem der vorstehenden Ansprüche, wobei die Abdeckung (20) einen Rahmen aufweist, wobei der Rahmen die obere Stirnwand (20b), die untere Stirnwand (20c), die obere Seitenwand (20a) und die untere Seitenwand (20d) umfasst.

5. Rotationserfassungsvorrichtung nach einem der vorstehenden Ansprüche, wobei der Winkelweg des ersten Teils (10) durch mindestens eine Seitenwand (12b1, 12b2, 12b3) des Gehäuses (12b) des zweiten Teils (12) und/oder durch mindestens eine seitliche Seitenwand (20e) der Abdeckung (20) begrenzt ist.

6. Rotationserfassungsvorrichtung nach einem der vorstehenden Ansprüche, wobei der mindestens eine Arm (10b, 10c) des ersten Teils (10) eine mit dem Grundkörper (10a) fluchtende gerade Verlängerung ist.

7. Rotationserfassungsvorrichtung nach einem der vorstehenden Ansprüche, wobei der mindestens eine Arm (10b, 10c) des ersten Teils (10) eine auf dem zweiten Teil (12) gleitende erste Auswölbung (10b1, 10c1) und eine auf der jeweiligen Stirnwand (20b, 20c) der Abdeckung (20) gleitende zweite Auswölbung (10b2, 10c2) aufweist.

8. Rotationserfassungsvorrichtung nach einem der vorstehenden Ansprüche, wobei die Abdeckung (20) mindestens eine den zweiten Teil (12) zumindest teilweise umgebende elastische Lasche (21a, 21b, 21c) aufweist, die zur Fixierung der Abdeckung (20) am zweiten Teil (12) mit einem entsprechenden Zapfen (22a, 22b, 22c) des zweiten Teils (12) zusammenwirkt.

9. Rotationserfassungsvorrichtung nach Anspruch 8, wobei die Abdeckung (20) mindestens zwei mit entsprechenden Zapfen (22a, 22b) des zweiten Teils (12) zusammenwirkende, gleichmäßig verteilte obere elastische Laschen (21a, 21b) aufweist, wobei die Abdeckung (20) vorzugsweise an jeder seitlichen Fläche der Abdeckung (20) eine in gleicher Weise mit entsprechenden Zapfen (22c) des zweiten Teils (12) zusammenwirkende zusätzliche elastische Lasche (21c) aufweist.

10. Rotationserfassungsvorrichtung nach einem der vorstehenden Ansprüche, wobei die Abdeckung (20) mindestens eine Aussparung (23a, 23b) und das zweite Teil (12) eine entsprechende Auswölbung (24a, 24b) aufweist, wobei die Auswölbung (24a, 24b) des zweiten Teils (12) bei Fixierung der Abdeckung (20) am zweiten Teil (12) in der entsprechenden Aussparung (23a, 23b) aufgenommen ist.

11. Rotationserfassungsvorrichtung nach einem der vorstehenden Ansprüche, wobei die Magnetfeldsensorkomponente (16) in einem an das Gehäuse (12b), in dem der erste Teil (10) angeordnet ist, angrenzenden Hohlraum (12a) des zweiten Teils (12) angeordnet ist und das magnetische Element (14) im Grundkörper (10a) des ersten Teils (10) angeordnet ist.

12. Rotationserfassungsvorrichtung nach einem der vorstehenden Ansprüche, wobei der Grundkörper (10a) ein Befestigungsstück (11) aufweist, das aus dem ersten Teil (10) in einer im Wesentlichen zur Pedalwelle (31) parallelen Richtung herausragt, wobei das Befestigungsstück (11) zur Ankopplung an das Fahrzeugpedal (30) mittels eines Verbindungselements (34) ausgebildet ist.

13. Rotationserfassungsvorrichtung nach einem der vorstehenden Ansprüche, wobei der zweite Teil (12) einen Schnappverschluss (17) aufweist, der zur Befestigung an einer zur Pedalwelle (31) koaxialen fixen Rotationswelle (32) ausgebildet ist, wobei die Pedalwelle (31) eine die fixe Rotationswelle (32) aufnehmende Hohlwelle ist und die fixe Rotationswelle (32) an einem Halter (33) befestigt ist.

14. Fahrzeugpedalanordnung umfassend ein drehbar mit einem Halter (33) verbundenes Fahrzeugpedal (30), wobei die Fahrzeugpedalanordnung eine Rotationserfassungsvorrichtung (1) nach einem der vorstehenden Ansprüche enthält.

## Revendications

1. Dispositif de détection de rotation pour la détection de la rotation d'une pédale de véhicule (30) comprenant un arbre de pédale (31), la pédale (30) pouvant tourner autour d'un axe de rotation (A) s'étendant à travers un centre de l'arbre de pédale (31), le dispositif de détection de rotation (1) comprenant
une première partie mobile (10), qui est configurée pour tourner autour de l'axe de rotation (A) avec la pédale (30),
une seconde partie fixe (12), dans laquelle la première et la seconde partie (10, 12) sont disposées radialement à l'extérieur de l'arbre de pédale (31),
un composant de détection de champ magnétique (16) disposé dans la première (10) ou dans la deuxième partie (12), et
un élément magnétique (14) disposé dans la partie de la première ou de la seconde partie (10, 12) qui ne comprend pas le composant de détection de champ magnétique (16), dans lequel le composant de détection de champ magnétique (16) génère un signal électrique provenant de l'interaction magnétique entre la première et la seconde partie (10, 12) lorsque la première et la seconde partie (10, 12) se déplacent l'une par rapport à l'autre,
dans lequel la première partie (10) est couplée à la seconde partie (12) de sorte que le mouvement de la première partie (10) est contrôlé par rapport à la seconde partie (12),
le dispositif de détection de rotation (1) comprenant en outre un couvercle (20) couplé à la seconde partie (12) qui couvre au moins partiellement la première partie (10),
la deuxième partie (12) comprenant un logement (12b) où la première partie (10) est disposée, **caractérisé en ce que** la première partie (10) comprend une partie de base (10a) et au moins un bras supérieur (10b) faisant saillie de la partie de base (10a) et au moins un bras inférieur (10c) faisant saillie de la partie de base (10a),
le couvercle (20) comprenant une paroi avant supérieure (20b) délimitant une rainure de guidage supérieure (18) avec la seconde partie (12), dans laquelle la rainure de guidage supérieure (18) coopère avec au moins un bras supérieur (10b) et une paroi avant inférieure (20c) délimitant une rainure de guidage inférieure (19) avec la seconde partie (12), dans laquelle la rainure de guidage inférieure (19) coopère avec au moins un bras inférieur (10c) pour guider la première partie (10) par rapport à la seconde partie (12) dans une direction axiale,
le couvercle (20) comprenant en outre une paroi latérale supérieure (20a) et une paroi latérale inférieure (20d), la paroi latérale supérieure (20a) et la paroi latérale inférieure (20d) coopérant avec la partie de base (10a) pour guider la première partie (10) par rapport à la deuxième partie (12) dans une direction radiale.

2. Dispositif de détection de rotation selon la revendication 1, dans lequel la partie de base (10a) comprend un contour supérieur et un contour inférieur, la paroi latérale supérieure (20a) du couvercle (20) coopérant avec le contour supérieur de la partie de base (10a), et la paroi latérale inférieure (20b) du couvercle (20) coopérant avec le contour inférieur de la partie de base (10a).

3. Dispositif de détection de rotation selon la revendication 2, dans lequel le contour supérieur et le contour inférieur de la partie de base (10a) comprennent au moins deux saillies respectives (10b1, 10b2, 10c1, 10c2), les saillies (10b1, 10b2) du contour supérieur glissant sur la paroi latérale supérieure (20a) du couvercle (20) et les saillies (10c1, 10c2) du contour inférieur glissant sur la paroi latérale inférieure (20d) du couvercle (20).

4. Dispositif de détection de rotation selon l'une quelconque des revendications précédentes, dans lequel le couvercle (20) comprend un cadre, le cadre comprenant la paroi avant supérieure (20b), la paroi avant inférieure (20c), la paroi latérale supérieure (20a) et la paroi latérale inférieure (20d).

5. Dispositif de détection de rotation selon l'une quelconque des revendications précédentes, dans lequel la trajectoire angulaire de la première partie (10) est délimitée par au moins une paroi latérale (12b1, 12b2, 12b3) du boîtier (12b) de la deuxième partie (12) et/ou par au moins une paroi latérale (20e) du couvercle (20).

6. Dispositif de détection de rotation selon l'une quelconque des revendications précédentes, dans lequel au moins un bras (10b, 10c) de la première partie (10) est une extension droite alignée avec la partie de base (10a).

7. Dispositif de détection de rotation selon l'une quelconque des revendications précédentes, dans lequel au moins un bras (10b, 10c) de la première partie (10) comprend une première protubérance (10b1, 10c1) qui coulisse sur la deuxième partie (12) et une deuxième protubérance (10b2, 10c2) qui coulisse sur la paroi frontale respective (20b, 20c) du couvercle (20).

8. Dispositif de détection de rotation selon l'une quelconque des revendications précédentes, dans lequel le couvercle (20) comprend au moins un crochet élastique (21a, 21b, 21c) qui entoure au moins partiellement la deuxième partie (12) et coopère avec une cale respective (22a, 22b, 22c) de la deuxième partie (12) pour fixer le couvercle (20) sur la deuxième partie (12).

9. Dispositif de détection de rotation selon la revendication 8, dans lequel le couvercle (20) comprend au moins deux crochets élastiques supérieurs également répartis (21a, 21b) qui coopèrent avec des coins respectifs (22a, 22b) de la deuxième partie (12), le couvercle (20) comprenant de préférence un crochet élastique supplémentaire (21c) sur chaque côté latéral du couvercle (20) coopérant également avec des coins respectifs (22c) de la deuxième partie (12).

10. Dispositif de détection de rotation selon l'une quelconque des revendications précédentes, dans lequel le couvercle (20) comprend au moins un évidement (23a, 23b) et la deuxième partie (12) comprend une saillie respective (24a, 24b), la saillie (24a, 24b) de la deuxième partie (12) étant logée dans l'évidement respectif (23a, 23b) lorsque le couvercle (20) est fixé à la deuxième partie (12).

11. Dispositif de détection de rotation selon l'une quelconque des revendications précédentes, dans lequel le composant de détection de champ magnétique (16) est disposé dans une cavité (12a) de la deuxième partie (12) qui est adjacente au logement (12b) où est disposée la première partie (10), et l'élément magnétique (14) est disposé dans la partie de base (10a) de la première partie (10).

12. Dispositif de détection de rotation selon l'une quelconque des revendications précédentes, dans lequel la partie de base (10a) comprend une partie de fixation (11) qui fait saillie de la première partie (10) dans une direction sensiblement parallèle à l'axe de pédale (31), la partie de fixation (11) étant configurée pour être couplée à la pédale du véhicule (30) au moyen d'une liaison (34).

13. Dispositif de détection de rotation selon l'une quelconque des revendications précédentes, dans lequel la deuxième partie (12) comprend un bouton-pression (17) configuré pour être fixé à un arbre de rotation fixe (32) qui est coaxial à l'arbre de pédale (31), l'arbre de pédale (31) étant un arbre creux qui loge l'arbre de rotation fixe (32) et l'arbre de rotation fixe (32) étant fixé à un support (33).

14. Agencement de pédale de véhicule comprenant une pédale de véhicule (30) couplée en rotation à un support (33), l'agencement de pédale de véhicule comprenant un dispositif de détection de rotation (1) selon l'une quelconque des revendications précédentes.
